# EUROPEAN PATENT SPECIFICATION

(11) **EP 2 661 588 B1**
(45) Date of publication and mention of the grant of the patent: **06.12.2017**
(21) Application number: 12705727.1
(22) Date of filing: 03.01.2012
(51) Int. Cl.: F24F 5/00, F24F 7/06, A01G 9/24, F28D 20/02

(54) **DISPLACEMENT VENTILATION SYSTEM**
VERSCHIEBUNGSBELÜFTUNGSSYSTEM
SYSTÈME DE VENTILATION PAR DÉPLACEMENT

(30) Priority: 03.01.2011 NL 2005947
(43) Date of publication of application: 13.11.2013
(73) Proprietor: Autarkis B.V., 7451 PK Holten (NL)
(72) Inventor: SCHMITZ, Antonius Henricus Hubertus, NL-6061 CT Posterholt (NL)
(74) Representative: van Essen, Peter Augustinus
(86) International application number: PCT/NL2012/050004
(87) International publication number: WO 2012/093938

(56) References cited:
- DE-A1- 2 931 359
- DE-A1- 3 532 820
- DE-U1- 20 310 593
- US-A1- 2005 005 585
- US-B1- 7 322 208

## Description

### TECHNICAL FIELD OF THE INVENTION

The invention relates to a displacement ventilation system for conditioning the air temperature in a space defined by the preamble of claim 1, more particular, to a ventilation system for conditioning air temperature in a space of a building which external surface comprises one or more large surfaces which are covered with a transparent material, more particular a surface of glass. The invention further relates to a method of conditioning the temperature in such a space.

### BACKGROUND OF THE INVENTION

Displacement ventilation systems are commonly known. The principle of displacement ventilation involves air supply and distribution in a room by upwards displacement, i.e. as direct as possible through-flow in the occupied zone in order to achieve high ventilation efficiency. In addition, air distribution by displacement generally makes it possible to supply a larger quantity of air than for conventional mixing ventilation, which requires concentrated supply at high velocity.

The airflow pattern differs greatly from that caused by conventional mixing supply jets. Air is supplied at low velocity to the occupied zone, often near the floor. The new air is normally slightly cooler than the air in the room, and thus has a tendency to fall and spread out over the floor in a uniformly thin layer (approximately 20 cm), due to gravity, without mixing significantly with the room air above. This process leads to a continuous, upwards uniform displacement of air in the room, akin to filling a bathtub with water.

An example of this is DE2931359, which discloses a device for heating confined rooms, especially hobby greenhouses, using a flow of air that is forced to flow from above to the floor of the greenhouse via a ventilator or blower, and controllable heating elements positioned in the flow of air, in which a vertically arranged shaft having air inlet openings at roof ridge height and positioning of the blower inside the shaft, wherein the air shaft is freestanding and at its lower end closed by a closed bottom wall, wherein the air outlet opening is provided directly above the bottom wall and in at least one of the side walls of the shaft, and wherein blowers and heaters are positioned near the bottom of the air outlet opening.

Air in the occupied zone becomes heated by occupants etc. The air in the occupied zone rises upwards due to natural convection. The occupied zone is the zone in a room where a human is normally present. This is the air zone, which extends to about 2 meter above the floor surface in a room.

The air in the occupied zone is thus generally fresher than for mixing ventilation. Relative warm air is extracted from the room at ceiling level.

In addition, for localized pollutant sources that generate heat, such as humans, the released pollutants rise rapidly to above the occupied zone, due to buoyancy forces (an upwards flowing natural convection plume). This local upwards flow also brings up a steady stream of fresh air from the floor up to the breathing zone of occupants. The air in the breathing zone is thus slightly fresher than elsewhere in the room at the same height.

The supplied air flow rate and its cooling capacity of conventional air displacement systems are limited by the size of the air supply areas, and on the magnitude of the air flow rate that is technically and/or economically justifiable. The cooling capacity is also limited by how cold the supply temperature can be without causing local discomfort (cold draught along floor).

DE20310593U1 relates to phase change material (PCM) that is arranged in a casing provided in a room.

### SUMMARY OF THE INVENTION

The object of the invention is to provide an improved displacement ventilation system, which overcomes at least one of the disadvantages of the known displacement ventilation systems, described above and which provides improved comfort for the occupants.

According to the invention, this object is achieved by a system having the features of Claim 1. Advantageous embodiments and further ways of carrying out the invention may be attained by the measure mentioned in the dependent claims.

According to the invention, the displacement ventilation system further comprises one or more PCM units including a phase change material (PCM) having a melting point corresponding to a desired space temperature, wherein the displacement ventilation system is configured for generating an airflow from the suction opening along surfaces of the one or more PCM-units to the air supply opening.

The invention is based on the recognition that in spaces having a greenhouse like appearance, or offices with a large area of glass, for that matter, the temperature fluctuates with the amount of sunlight falling into the space. If the sun is shining, the temperature rises rapidly and when the sun disappears, what could be due to clouds between the sun and the space, the temperature could fall rapidly. In known displacement ventilation systems, a cooled airflow has to be blown into a space to keep the temperature at a desired room temperature. The temperature of the cooled air flow has to be lower than the desired room temperature. When using such a system in a space described above, the rise of temperature will be slowed down due to the cooling capacity. However, the cooling capacity will cause a faster drop down of the temperature, when the sun disappears. Consequently, this will result in discomfort for the occupants. To avoid these effects, a controller of the system has to react quickly on sunlight intensity changes to control the temperature of the air supplied to the space. Furthermore, the cold airflow will form a layer of cold air above the floor. The occupants will get cold feet, which is undesired. According to the invention, A Phase Change Material PCM having a predefined melting temperature is used in the system to supply a continuous airflow with a temperature corresponding to the melting temperature into the space. In this way, the air temperature in the occupied zone is kept almost constant, essentially independent of the temperature of the air above the occupied zone. In this way, when sunlight is falling into to space, the warm air in the space is cooled by the PCM-unit and the heat is stored as latent heat in the PCM-unit. When the air temperature in the occupied zone falls below the PCM melting temperature, PCM-unit will warm to airflow by the transfer of latent heat to the airflow. No complex control system is needed to control the temperature of the airflow supplied into the space. In fact, only the speed of the air displacement device needs to be controlled. Additionally, the temperature of the airflow into the space, which is essentially at the melting temperature, will be higher than the temperature of the supplied air of a conventional displacement system providing the same cooling capacity, which improves the comfort in the occupied zone, especially in large spaces. In fact, the system stabilizes the temperature of a room or space in a building in a flexible way. Furthermore, it needs very little power.

In the invention, the displacement ventilation system is a mobile system. This could be done by rolling means, such as castors. This feature provides a displacement ventilation system that is very suitable to be used in spaces, which are regularly rearranged, for example the space of an exhibition or fair.

In the invention, the displacement ventilation system comprises an elongated duct with a vertical longitudinal axis wherein the suction opening is positioned at the distal end of the elongated duct. In a further embodiment, the elongated duct has an adjustable length. In a further embodiment, the elongated duct comprises at least two telescopic duct sections. These features provides a simple construction to obtain a down-flow convection system and allow users to position the suction opening as high as possible in the space, so as to improve the efficiency of the system.

In the invention, the one or more PCM-units form the air supply opening. In this way, a low velocity air supply could be provided. In a further embodiment, the one or more PCM units are positioned around the vertical longitudinal axis. This feature allows enlarging the air supply opening, which consequently decreases the speed of the airflow though the opening. This improves the comfort in the space.

In the invention, a PCM-unit comprises two or more PCM-sub units configured for serially passing a flow of air through each of the two or more PCM-sub units. These features allow one to adjust easily the latent heat storage capacity of the system. In order to provide sufficient PCM material to provide proper cooling and/or heating of a room, in was found that this requires about 6-13 kg of PCM per m² of a room. In the current invention, PCM as such provided in a container, for instance in plate-shaped holders, provides such an amount of PCM in a relatively compact way. For instance, extruded or injection moulded containers can be used. These containers can be from a thermoplastic material like polypropylene or (HD) polyethylene. Thus, via this "macro encapsulation", the PCM is provided in the system of the current invention.

PCM can be provided as salt hydrates, fatty acids and esters, and various paraffins (such as octadecane). Recently also ionic liquids were investigated as novel PCMs and can be used.

In the system of the current invention, for instance for use in office buildings for one system per 7-15 m², 50-200 kg of PCM is used. In an embodiment, between 70 and 150 kg of PCM is used per system. This amount of PCM is stored within a volume of about 0.5-1.2 m³, in particular 0.6-0.9 m³. In this way, the system can store/extract latent heat for about 10-15 hours, i.e., more that a day or a night. Thus, the system can stabilize temperature of a 24 hour day/night cycle, for instance by absorbing heat during the day and releasing heat during the night, requiring an amount of power of as little as up to only maximum 20-100 Watt of an air displacement device. This allows a maximum flow of air of up to about 2-4 m³/h/Kg PCM. The unit does not require complicated control systems when placed in a building. In fact, the air displacement device might be running day and night at full load without further control system. In order to save energy of the air displacement device, a temperature sensor for incoming air temperature and a temperature sensor for outgoing air temperature may be sufficient. If the incoming temperature of the air is above a set temperature, for instance above 25°C, the air displacement device will run at full load. If the temperature of the incoming air is between the set temperature and the melting temperature of the PCM, the speed can vary linearly with the temperature between a maximum value down to a minimum value, for instance down to 10%, when approaching the melting temperature. When the temperature of the incoming air gets below the melting temperature, the speed will linearly increase for instance up to maximum when the temperature gets below minimum temperature, for instance below 20°C. The temperature of the outflowing air may additionally, in combination or exclusively influence the rate of the air displacement device. If the temperature is above the maximum temperature of below the minimum temperature, the air displacement device will run full load, in other cases in the linear mode. Thus efficiency can increase even further.

In most documents of the state of the art that disclose the use of PCM, the PCM is incorporated in climate systems for buildings. The PCM is in these systems fixed to walls and ceilings, or integrated therein. Using PCM for providing a stabilize temperature in a system of the invention for instance using mobile systems was not considered.

In a further embodiment of the invention, a low velocity supply structure forms the air supply opening. This improves the comfort in the space.

In a further embodiment of the invention, the system further comprises a solar cell and/or battery, which might be rechargeable, being electrically coupled to the air displacement device. These features makes that the system could be used without having a mains supply available. As the air displacement device is the main power consumer, requiring a relative low power, one battery could positioned in the system is sufficient to empower the system for more than one day.

It is a further aspect of the invention to provide an improved method of controlling the climate of a space, occupied with humans. The method comprises, providing a ventilation system comprising all technical features of a displacement ventilation system according to the invention in a room of a building, wherein the temperature in the room is mainly affected by the intensity of the sunlight. Such space typically has large surfaces, which are covered with a transparent material, such as glass.

It will be clear that the various aspects mentioned in this patent application may be combined and may each be considered separately for a divisional patent application. Other features and advantages of the invention will become apparent from the following detailed description, taken in conjunction with the accompanying drawing, which illustrate, by way of example, various features of preferred embodiments of the invention.

### BRIEF DESCRIPTION OF THE FIGURES

These and other aspects, properties and advantages of the invention will be explained hereinafter based on the following description with reference to the drawings, wherein like reference numerals denote like or comparable parts, and in which:
FIG. 1 illustrates a cross section of an embodiment of a displacement ventilation system according to the invention;
FIG. 2a and 2b illustrates the functioning of the system in day and night situation, respectively;
FIG. 3 illustrates a cross section of second embodiment; and,
FIG. 4 illustrates the use of the displacement ventilation system in a greenhouse like building.

### DESCRIPTION OF EMBODIMENTS

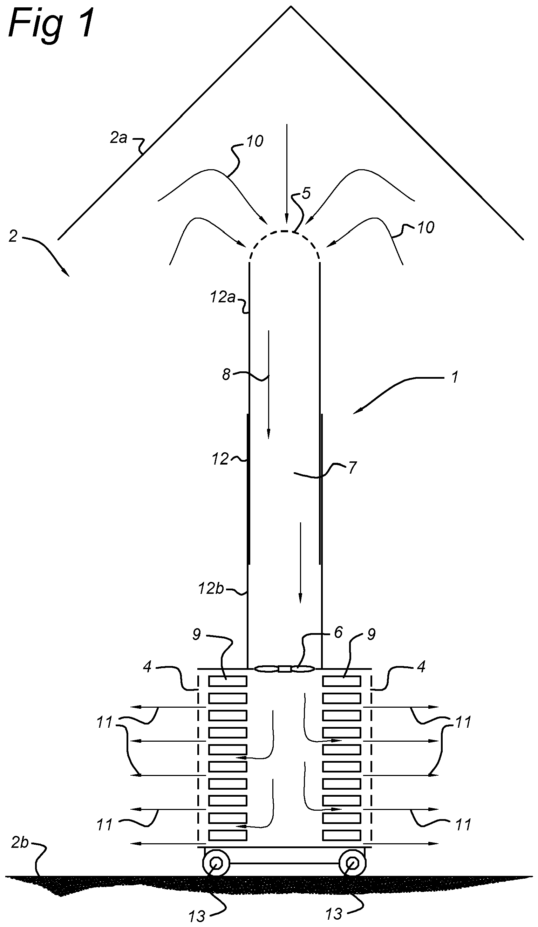

Figure1 illustrates an exemplar embodiment of a displacement ventilation system 1 according to the invention. The displacement ventilation system is configured for conditioning the climate in a space 2. The displacement ventilation system 1 comprises an air supply opening 4 configured for supplying fresh air directly to an occupied zone of the space and an air suction opening 5 configured for extracting air from said space above the occupied zone. In context of the present invention, the occupied zone is the zone in which occupant live. Normally, the occupied zone is the air-layer up to a height of 2 metres above the floor. The occupied zone is important for comfort consideration. The term "air supply opening 4" in the context of the present invention is the opening formed by all sub openings through which an air flow is supplied in the occupied zone. The displacement ventilation system generates an airflow 8 from the suction opening 5 to the air supply opening 4. The space through which the air flows in the system is called air channel 7.

An air displacement device 6 is positioned in the air channel between the suction opening 5 and air supply opening 4. The air-displacement device is configured for generating an airflow 8 from the suction opening 5 to the air supply opening through the air channel 6. The air displacement device is a powered device configured to create a flow within a gas. The air displacement device could be in the form of an axial fan, centrifugal fan, cross flow or tangential fan. The flow generated by the air displacement device is variable by controlling the rotation speed of the fan. A control part, not shown, controls the rotation speed of the fan and as a result the speed of the air flow through the air-channel 7.

The displacement ventilation system 1 further comprises one or more PCM units 9 positioned in the air channel 7. A PCM unit 9 comprises a phase change material with a melting/solidifying temperature. The melting/solidifying temperature is the temperature at which the PCM material is capable of releasing/storing latent heat. The PCM material could be an organic PCM such as paraffin and fatty acids or an inorganic PCM, such a as salt hydrates. Inorganic PCMs have the advantage that they have a high volumetric latent heat storage capacity, are low cost, have a sharp melting point, have a high thermal conductivity and are non-flammable, which makes them very suitable to be used in buildings. The melting temperature is chosen such that it corresponds to the desired space temperature. For most plants in a greenhouse, the optimal temperature for growing is in the range of 20 - 28°C. A melting temperature in the range of 19 - 22°C, more preferably a melting temperature of 20,5°C is regarded suitable for use in a greenhouse like space to provide optimal comfort for occupants in said space.

A PCM unit 9 is arranged in the form of essentially parallel panels between which the airflow can flow. In the embodiment of FIG. 1, the panels are positioned horizontal and the air flows horizontally along the surface of the panels through air channels between the panels. FIG. 1 shows two PCM units 9, one at each side. The number of PCM-units will determine the latent heat storage capacity. In another embodiments, three, four, five, etc PCM unit's are used which are positioned to form a circle to form an air channel in which the fan 6 will blow an air flow.

The PCM-unit 9 optionally in combination with a grid to protect the PCM-unit forms a low velocity supply structure. The air supply openings 4 are provided at low level above the floor 2b of the space. Due to the supply of air with a low velocity, a considerable vertical temperature gradient naturally occurs between the floor 2b and roof 2a of the space.

The displacement ventilation system according to the invention further comprises an elongated duct 12. The elongated duct 12 has a vertical longitudinal axis. The suction opening 5 is positioned at the distal end of the elongated duct 12. The air displacement device 6 is positioned at the proximal end of the elongated duct 12. The length of the elongated duct is such that the suction opening is at least above the occupied zone, for example 2 meter the floor level 2b. The suction opening 5 could comprise a grid to prevent objects to fall into the displacement ventilation system. Preferably the suction opening 5 has a shape such that objects will fall from the opening due to gravity forces.

The elongated duct 12 could have a fixed length. The embodiment shown in FIG. 1 comprises an elongated duct 12 with an adjustable length. The elongated duct comprises a first 12a and a second 12b telescopic duct section. The first duct section 12a can slide out from the second duct section 12b to lengthen the elongated duct 12. It might be clear that more telescopic duct sections might be used. Preferably, the second telescopic duct section, which is fixed with respect to the PCM-units 9, has a length such that its distal end reaches above the occupied zone. The first telescopic part 12a can be used to position the suction opening 5 at a preferred height in the space. The preferred height is a preferred distance from the roof 2a of the space.

Instead of telescopic duct sections, duct sections with fixed lengths could be used. By positioning the duct sections on each other, an elongated duct with a predetermined length could be obtained. In this way, the suction opening could be positioned optimally with respect to the height of the space where the displacement ventilation system 1 is located in said space.

The displacement ventilation system has a size and weight such that the system can be moved in the space to enable one to position the system anywhere in the space. Therefore, the system comprise rolling means 13 configured for moving the system across the floor 2b. The rolling means 13 could be in the form of castors. The rolling means 13 could also be in the form of a support structure such that the system could be lifted with a forklift.

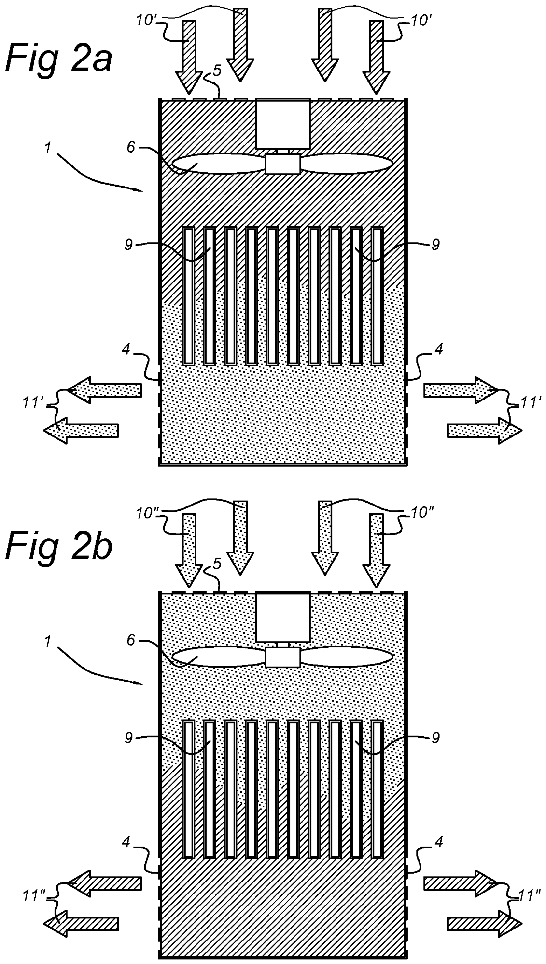

FIGS 2a and 2b illustrates the functioning of the displacement ventilation system according to the invention. It should be noted that in these figures the elongated duct is not included and that only the suction opening 5 is shown. FIG. 2a illustrates the functioning of the displacement ventilation system 1 at daytime, i.e. the period of time the temperature of the air at height of the suction opening 5 is higher than the melting temperature of the PCM-material. The fan 6 when activated generates an air flow from the suction opening 5 at the top of the system 1 to the air supply opening 4 at the bottom. The warm air 10' retrieved from the space above the occupied zone passes along surfaces of the PCM unit 9. The PCM-unit 9 extracts the heat from the airflow and stores it as latent heat in the PCM-material. The temperature of the airflow will decrease to the melting temperature of the PCM-material and is subsequently supplied to the space through the air supply opening 4. As the air supply opening 4 comprises a low velocity supply structure, the occupants in the occupied zone of the space will find the climate in the space comfortable as the airflow does not cause turbulences in the space. The airflow 11' supplied to the space has a temperature corresponding to the melting temperature of the PCM material, which is about 20,5°C. In this situation, i.e. when the sun is shining, heat is extracted from the space and stored in the PCM-unit 9 as latent heat.

FIG. 2b illustrates the functioning of the displacement ventilation system 1 at night, i.e. the period of time the temperature of the air at height of the suction opening 5 is lower than the melting temperature of the PCM-material. The fan 6 when activated generates an air flow from the suction opening 5 at the top of the system 1 to the air supply opening 4 at the bottom. The cold air 10" retrieved from the space above the occupied zone passes along surfaces of the PCM unit 9, which has a temperature corresponding to the melting temperature of the PCM-material. The PCM-unit 9 provides its stored latent heat to the airflow. The temperature of the airflow will increase to the melting temperature of the PCM-material and is subsequently supplied to the space through the air supply opening 4. As the air supply opening 4 comprises a low velocity supply structure, the occupants in the occupied zone of the space will find the climate in the space comfortable as the airflow does not cause turbulences in the space. The heated airflow 11" supplied to the space has a temperature corresponding to the melting temperature of the PCM material, which is about 20,5°C. In this situation, i.e. when the sun is not shining, heat is extracted from the PCM-unit and supplied to the space to heat the air in said space. In greenhouse like buildings, the temperature fluctuates with the intensity of the sunlight. When the temperature outside the space of a greenhouse like building is lower than the temperature in the space, in a relative short time the temperature in the space will drop to the external temperature. By means of the system according to the invention, a surplus of heat when the sun is shining is stored in the PCM-unit and delivered to the space when the sun is not shining any more. Furthermore, the system according to invention enables us to reduce the maximum capacity of an external heating system. The system according to the invention could be used as heat buffer in the space.

An exemplary displacement ventilation system according to the invention has the following characteristics: airflow 2450 m³/h, PCM mass 400Kg, latent heat capacity 16,7kWh, cooling capacity 1,2kW, heating capacity 1,2kW, fan power 72W and processing time, i.e. average time to store/extract latent heat from PCM-unit 13,6 hrs.

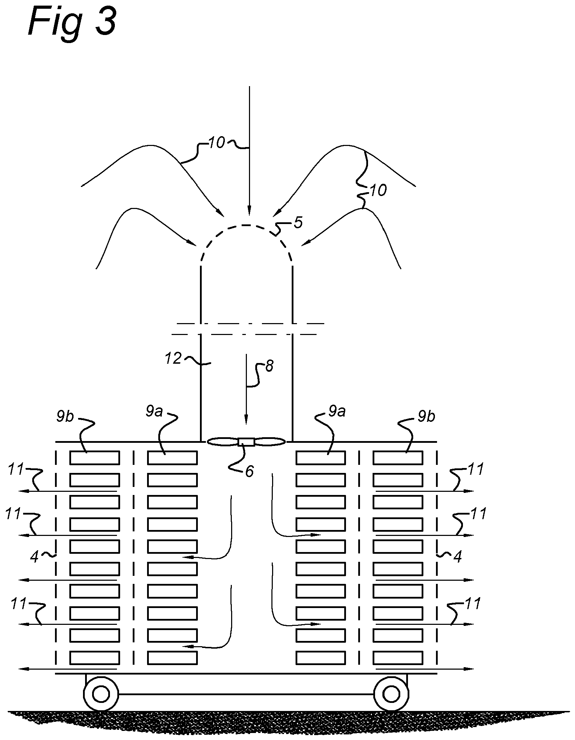

FIG. 3 illustrates another embodiment of an air displacement ventilation system according to the invention. In this embodiment, the PCM-unit is a modular unit comprising PCM sub-units 9a, 9b. FIG. 3 shows that two PCM sub-units are positioned such that the airflow 8 serially flows along the surface of the first PCM-sub-unit 9a and the second PCM sub-unit 9b. By cascading PCM sub-units 9a, 9b the latent heat capacity of the system can be adjusted to the requirements. A PCM sub-unit comprises in an embodiment a complementary coupling structure to couple two PCM-sub-units such that the panels of the coupled sub-units are in line.

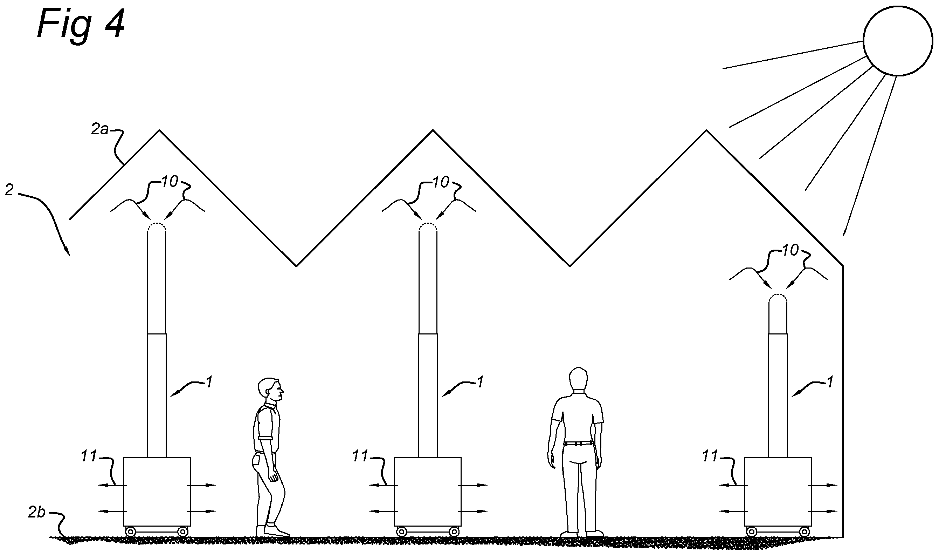

FIG. 4 illustrates the use of the mobile displacement ventilation system according to the invention. A greenhouse like space, i.e. a building with relative large surfaces of transparent material such as glass, forms a space 2 between a floor 2b and a roof 2a and sidewalls 2c. The roof 2a and sidewalls could be fully covered with glass. In the space 2, three ventilation displacement systems 11 are provided. The systems 11, could be placed anywhere on the floor surface of the space. The height of the suction opening 5 is adjustable. The suction opening is preferably as high as possible positioned in the space. The height depends on the distance between the roof 2a and the floor 2b.

The mobile displacement ventilation system could comprise a solar cell to empower the air displacement device. The solar cell could be attached to the elongated duct and is electrically coupled to the air displacement device 6. The displacement ventilation system could further comprise a battery, in an embodiment a rechargeable battery, which is electrically coupled to the air displacement device 6.

The displacement ventilation system could further comprise an air-filter unit (not shown) for filtering pollutants from the airflow through the system. The air-filter unit could be positioned anywhere between the suction opening and the air supply opening. The air-filter comprises preferably a replaceable air filter, which is easily to be replaced. In an embodiment, the air-filter is positioned down stream of the PCM-unit 9.

An example of the use of the system is described below. Consider a traditional office building with a "top" (or "tob") cooling system that usually has a designed primary air flow rate of 7.5 m³/h/m². In such a design, the primary air temperature is 16 °C. In a quality II indoor climate the indoor temperature may rise up to 25°C. In such a situation, the cooling power of the top cooling installation is 15 W/m². Suppose an office space with a floor space of 20 m² for such an office building. In such an office space, suppose one or two systems would be used. Tthe lower part of the housing can be between 0.6 and 1.2 m³. Each system would for instance be laid out to have a foot surface of about 1 m x1 m, and be about 0.8 m high for the (lower) housing part housing the PCM units 9. The cross section of the elongated duct (circular in this example) would be between 200 and 300 mm. Suppose the lower housing part would house about 70-150 kg of PCM, for instance in PCM units 9. Suppose a melting temperature of the PCM of between 20°C and 23°C, in particular 22°C. Furthermore, in such a design the air displacement device 6 would be able to provide an air flow rate of maximum between 200 and 300 m³/h. With this, a cooling power of 20-80 W/m² is possible. For such a unit, the air displacement device 6 would be about 20-30 W max power. This low power for instance in combination with a solar cell and a small battery would allow a free-standing unit. Furthermore, the air speed of the air flowing out of the system would be less than 180 m/h, i.e., less than 0.05 m/s at full load.

In general, the system for an office would be laid out with an air displacement device providing a maximum flow rate of 2-4 m³/h/kg PCM. Furthermore, the system would hold about 70-150 kg of PCM. Using one system per 10m² of office floor space would save about 20 % on cooling, 30 % on heating, and would also save on maintenance of the existing cooling/heating system in the building. It may for instance be possible to install a system in an office space on a temporary basis, for instance on warmer summer days and on colder winter days. The system would thus allow a carbon footprint upgrade of a building in a simple and cost effective way.

The system may have a housing that allows a modular housing of PCM units 9, allowing adding or removing of PCM units 9. Also, PCM units 9 having a selected melting temperature may be installed when needed.

The present invention provides a down-flow recirculation PCM ventilation convector unit suitable for placement in greenhouse like buildings. The down-flow convector unit improves the thermal comfort for occupants in such a building. Contrary to turbulent airflow by using mixing air ventilation systems, the unit according to the invention provides a thermal driven displacement ventilation system, which introduces almost no turbulent air flow in the space.

The measures described hereinbefore for embodying the invention can obviously be carried out separately or in parallel or in a different combination or if appropriate be supplemented with further measures; it will in this case be desirable for the implementation to depend on the field of application of the system.

## Claims

1. A displacement ventilation system (1) configured for conditioning the climate in a space (2), the system (1) comprising:
- an air supply opening (4) configured for supplying air directly to an occupied zone of the space (2), and
- a suction opening (5) configured for extracting air from said space (2) above the occupied zone,
**characterized in that**
the displacement ventilation system (1) is a mobile displacement ventilation system, further comprising:
- an air displacement device (6) for generating an airflow from the suction opening (5) to the air supply opening (4);
- a control part for controlling the air flow;
- one or more PCM units (9) including a phase change material (PCM) having a melting temperature corresponding to a desired space temperature;
- a housing for PCM units (9) having a volume of 0.5 - 1.2 m³ housing 50-200 kg of PCM;
- an elongated duct (12) with a vertical longitudinal axis wherein the suction opening (5) is positioned at the distal end of the elongated duct and the air displacement device (6) is positioned at the proximal end of the elongated duct, the elongated duct at its proximal end coupled to the housing for PCM units (9), and wherein
- the housing comprising the air supply opening (4);
- the one or more PCM units (9) arranged in the form of essentially parallel panels between which an airflow can flow and exit the housing via the air supply opening;
wherein the displacement ventilation system is configured for generating an airflow from the suction opening along surfaces of the PCM-units (9) to the air supply opening.

2. System (1) according to claims 1, **characterized in that** the housing has a volume of 0.6 - 0.9 m³ housing 70-150 kg of PCM.

3. System (1) according to any one of the preceding claims, wherein the air displacement device (6) has a capacity of inducing a maximum flow of air of 2-4 m³/h/kg PCM.

4. System (1) according to any of the preceding claims, **characterized in that** the elongated duct (12) has an adjustable length.

5. System (1) according to any of the preceding claims, **characterized in that** the elongated duct (12) comprises at least two telescopic duct sections (12a; 12b).

6. System (1) according to any of the preceding claims, wherein the one or more PCM-units (9) are positioned around the vertical longitudinal axis.

7. System (1) according to any of the preceding claims, wherein the one or more PCM-units (9) form the air supply opening (4).

8. System (1) according to any of the preceding claims, wherein a PCM-unit (9) comprises two or more PCM-sub units (9a; 9b) configured for serially passing an airflow through each of the two or more PCM-sub units.

9. System (1) according to any of the preceding claims, wherein a low velocity supply structure forms the air supply opening (4), allowing in an embodiment an air speed of less than 180 m/h.

10. System (1) according to any of the preceding claims, wherein the system further comprises a solar cell or a battery, in particular a rechargeable battery, electrically coupled to the air displacement device (6).

11. System (1) according to any of the preceding claims, further comprising rolling means (13) configured for moving the system across a floor (2b).

12. Method of conditioning the climate of a space, the method comprising, providing a ventilation system (1) comprising all technical features of a system according any of the preceding claims in said space (2), and energizing the ventilation system.

13. Method according to claim 12, wherein the space (2) has a greenhouse-like climate characteristic.

## Patentansprüche

1. Ein Verdrängungslüftungssystem (1), das zum Konditionieren des Klimas in einem Raum (2) konfiguriert ist, wobei das System (1) umfasst:
- eine Luftzufuhröffnung (4), die konfiguriert ist, um Luft direkt zu einer besetzten Zone des Raumes zuzuführen, und
- eine Saugöffnung (5), die zum Abziehen von Luft aus dem Raum (2) oberhalb der besetzten Zone konfiguriert ist,
**dadurch gekennzeichnet, dass**
das Verdrängungslüftungssystem (1) ein mobiles Verdrängungslüftungssystem ist, das ferner umfasst:
- Eine Luftverdrängungsvorrichtung (9) zum Erzeugen eines Luftstroms von der Saugöffnung (5) zu der Luftzufuhröffnung (4);
- ein Kontrollteil zum kontrollieren der Luftströmung;
- eine oder mehrere PCM-Einheiten (9), die ein Phasenänderungsmaterial (PCM) mit einer Schmelztemperatur entsprechend einer gewünschten Raumtemperatur umfassen;
- ein Gehäuse für PCM-Einheiten (9) mit einem Volumen von 0,5 - 1,2 m³ das 50-200 kg PCM aufweist;
- ein längliches Kanal (12) mit einer vertikalen Längsachse, wobei die Saugöffnung (5) am distalen Ende des länglichen Kanals angeordnet ist und die Luftverdrängungsvorrichtung (6) am proximalen Ende des länglichen Kanals angeordnet ist, das längliche Kanal am proximalen Ende zum Gehäuse für PCM-Einheiten (9) gekoppelt, und wobei
- das Gehäuse die Luftzufuhröffnung (4) aufweist;
- die eine oder mehrere PCM-Einheiten (9) angeordnet sind in Form von im wesentlichen parallelen Platten, zwischen denen ein Luftstrom strömen kann und das Gehäuse über die Luftzufuhröffnung (4) verlassen kann;
wobei das Verdrängungslüftungssystem zum Erzeugen eines Luftstroms von der Saugöffnung entlang Oberflächen der PCM-Einheiten (9) zu der Luftzufuhröffnung ausgebildet ist.

2. System nach Anspruch 1, **dadurch gekennzeichnet, daß** das Gehäuse ein Volumen von 0,6 - 0,9 m³ mit 70-150 kg PCM aufweist.

3. System (1) nach einem der vorhergehenden Ansprüche, wobei die Luftverdrängungsvorrichtung (6) eine Kapazität aufweist, einen maximalen Luftstrom von 2-4 m³ / h / kg PCM zu induzieren.

4. System (1) nach einem der vorhergehenden Ansprüche, **dadurch gekennzeichnet, daß** der langgestreckte Kanal (12) eine einstellbare Länge aufweist.

5. System (1) nach einem der vorhergehenden Ansprüche, **dadurch gekennzeichnet, daß** der langgestreckte Kanal (12) mindestens zwei teleskopische Kanalabschnitte (12a; 12b) aufweist.

6. System (1) nach einem der vorhergehenden Ansprüche, wobei die eine oder mehrere PCM-Einheiten (9) um die vertikale Längsachse herum angeordnet sind.

7. System (1) nach einem der vorhergehenden Ansprüche, wobei die eine oder mehrere PCM-Einheiten (9) die Luftzufuhröffnung (4) bilden.

8. System (1) nach einem der vorhergehenden Ansprüche, wobei eine PCM-Einheit (9) zwei oder mehr PCM-Untereinheiten (9a; 9b) umfasst, die zum seriellen Durchführen eines Luftstroms durch jede der zwei oder mehr PCM-Untereinheiten konfiguriert sind.

9. System (1) nach einem der vorhergehenden Ansprüche, wobei eine Niedriggeschwindigkeits-Versorgungsstruktur die Luftzufuhröffnung (4) bildet, was in einer Ausführungsform eine Luftgeschwindigkeit von weniger als 180 m / h ermöglicht.

10. System (1) nach einem der vorhergehenden Ansprüche, wobei das System ferner eine mit der Luftverdrängungseinrichtung elektrisch gekoppelte Solarzelle oder eine Batterie umfasst, ins besondere ein wiederaufladbare Batterie umfasst.

11. System (1) nach einem der vorhergehenden Ansprüche, wobei das System ferner Rollmittel (13) umfasst, die zum Bewegen des Systems über einen Boden (2b) konfiguriert sind.

12. Verfahren zur Konditionierung des Raumklimas, wobei das Verfahren umfasst: Bereitstellen eines Belüftungssystems (1), das alle technischen Merkmale eines Systems nach einem der vorhergehenden Ansprüche in dem Raum (2) umfasst, und Erregen des Lüftungssystems.

13. Verfahren nach Anspruch 12, wobei der Raum (2) eine gewächshausartige Klimakarakteristik aufweist.

## Revendications

1. Un système de ventilation par déplacement (1) configuré pour conditionner le climat dans un espace (2), le système (1) comprenant:
- une ouverture d'alimentation en air (4) configurée pour fournir de l'air directement à une zone occupée de l'espace (2);
- une ouverture d'aspiration (5) configurée pour extraire l'air dudit espace (2) au-dessus de la zone occupée,
**caractérisé en ce que**
le système de ventilation de déplacement (1) est un système de ventilation de déplacement mobile, comprenant en outre:
- Un dispositif de déplacement d'air (6) pour générer un flux d'air vers l'ouverture d'alimentation en air (4);
- un partis de commande pour contrôler un flux d'air;
- une ou plusieurs unités PCM (9) comprenant un matériau de changement de phase (PCM) ayant une température de fusion correspondant à une température spatiale souhaitée;
- un boîtier pour unités PCM (9) ayant un volume de 0,5 à 1,2 m³ logeant 50-200 kg de PCM;
- un conduit allongé (12) avec un axe longitudinal vertical dans lequel l'ouverture d'aspiration (5) est positionnée à l'extrémité distale du conduit allongé et le dispositif de déplacement d'air (6) est positionnée à l'extrémité proximale du conduit allongé, le conduit allongé a l'extrémité proximale étant couplé au boîtier pour unités PCM (9), et dans lequel
- le boîtier comprenant l'ouverture d'alimentation en air (4);
- l'une ou plusieurs unités PCM (9) situé sous la forme de panneaux essentiellement parallèles entre lesquels un flux d'air peut couler et peut sortir le boîtier via l'ouverture d'alimentation en air;
dans lequel le système de ventilation par déplacement est configuré pour générer un flux d'air de l'ouverture d'aspiration le long de surfaces des unités PCM (9) jusqu'à l'ouverture d'alimentation en air.

2. Système (1) selon la revendication 1, **caractérisé en ce que** le boîtier système de ventilation par déplacement comprend un boîtier ayant un volume de 0,6 à 0,9 m³ d'un boîtier de 70 à 150 kg de PCM.

3. Système (1) selon l'une quelconque des revendications précédentes, dans lequel le dispositif de déplacement d'air (6) a une capacité à induire un débit d'air maximal de 2-4m³/h/kg de PCM.

4. Système (1) selon la revendication 6, **caractérisé en ce que** le conduit allongé (12) a une longueur réglable.

5. Système (1) selon l'une quelconque des revendications précédentes, **caractérisé en ce que** le conduit allongé (12) comprend au moins deux sections de conduit télescopique (12a; 12b).

6. Système (1) selon l'une quelconque des revendications précédentes, dans lequel l'une ou plusieurs unités PCM (9) sont positionnées autour de l'axe longitudinal vertical.

7. Système (1) selon l'une quelconque des revendications précédentes, dans lequel l'une ou plusieurs unités PCM (9) forment l'ouverture d'alimentation en air (4).

8. Système (1) selon l'une quelconque des revendications précédentes, dans lequel une unité PCM (9) comprend deux ou plusieurs unités PCM-sub (9a; 9b) configurées pour transmettre en série un flux d'air à travers chacune des deux ou plusieurs unités PCM-sub.

9. Système (1) selon l'une quelconque des revendications précédentes, dans lequel une structure d'alimentation à faible vitesse forme l'ouverture d'alimentation en air (4), permettant dans un mode de réalisation une vitesse d'air inférieure à 180 m/h.

10. Système (1) selon l'une quelconque des revendications précédentes, dans lequel le système comprend en outre une cellule solaire ou une batterie, particulièrement une batterie rechargeable, couplée électriquement au dispositif de déplacement d'air (6).

11. Système (1) selon l'une quelconque des revendications précédentes, dans lequel le système comprend en outre un moyen de roulement (13) configuré pour déplacer le système à travers d'un plancher (2b).

12. Procédé de conditionnement du climat d'un espace, le procédé comprenant, la fourniture d'un système de ventilation (1) comprenant toutes les caractéristiques techniques d'un système selon l'une quelconque des revendications précédentes dans ledit espace (2) et l'excitation du système de ventilation.

13. Procédé selon la revendication 12, dans lequel l'espace (2) a une caractéristique de climat de type serre.
